# FASCICULE DE BREVET EUROPEEN

(11) **EP 4 347 279 B1**
(45) Date de publication et mention de la délivrance du brevet: **05.03.2025**
(21) Numéro de dépôt: 22732292.2
(22) Date de dépôt: 23.05.2022
(51) Int. Cl.: B60C 11/03, B60C 11/11, B60C 11/13

(54) **PNEUMATIQUE POUR UN VÉHICULE POIDS LOURD À USAGE MIXTE À FAIBLE BRUIT DE ROULAGE**
MEHRZWECK-LASTFAHRZEUGREIFEN MIT GERINGEM STRASSENGERÄUSCH
MIXED-USE HEAVY-DUTY VEHICLE TYRE WITH LOW ROAD NOISE

(30) Priorité: 31.05.2021 FR 2105687
(43) Date de publication de la demande: 10.04.2024
(73) Titulaire: COMPAGNIE GENERALE DES ETABLISSEMENTS MICHELIN, 63000 Clermont-Ferrand (FR)
(72) Inventeur: NEAU, Xavier, 63040 CLERMONT-FERRAND Cedex 9 (FR); QUANTINET, Benjamin, 63040 CLERMONT-FERRAND Cedex 9 (FR); BERTHIER, Romain, 63040 CLERMONT-FERRAND Cedex 9 (FR)
(74) Mandataire: M.F.P. Michelin
(86) Numéro de dépôt international: PCT/FR2022/050976
(87) Numéro de publication internationale: WO 2022/254121

(56) Documents cités:
- EP-A2- 0 347 817
- EP-A2- 0 479 761
- EP-A2- 0 734 887
- WO-A1-2019/229370
- FR-A1- 2 452 391
- JP-A- S6 198 601
- JP-U- S6 018 003
- US-A- 4 700 762

## Description

La présente invention a pour objet un pneumatique pour un véhicule poids lourd destiné à un usage mixte, c'est-à-dire apte à rouler sur des sols goudronnés ou caillouteux, et concerne plus particulièrement sa bande de roulement, comprenant une sculpture générant un faible bruit de roulage.

Une bande de roulement, constituée par au moins un matériau à base de caoutchouc, est la partie usante et adhérente du pneumatique, située à sa périphérie, destinée à être usée lors de son entrée en contact avec un sol par l'intermédiaire d'une surface de roulement, et à garantir l'adhérence du pneumatique dans son contact avec le sol.

Une bande de roulement comprend le plus souvent une sculpture qui est une combinaison de découpures, ou creux, et d'éléments en relief, de type blocs ou de type nervures. Une bande de roulement de pneumatique à usage mixte doit garantir l'adhérence du pneumatique, sur des sols rigides ou meubles, pouvant être recouverts d'eau, de boue ou de neige. En particulier, pour un usage sur un sol boueux, elle doit garantir une motricité suffisante. En outre, lors d'un usage sur un sol caillouteux, la bande de roulement doit être capable d'éjecter les cailloux susceptibles d'être emprisonnés dans ses creux, et/ou doit comporter des moyens de protection vis-à-vis de ces cailloux pour éviter leur migration vers l'intérieur du pneumatique susceptible d'entrainer une dégradation prématurée du pneumatique.

Les caractéristiques géométriques décrites dans ce document sont définies dans un repère cylindrique lié au pneumatique. Par convention, la direction circonférentielle ou longitudinale est la direction de rotation du pneumatique, la direction axiale ou transversale est la direction parallèle à l'axe de rotation du pneumatique et la direction radiale est une direction perpendiculaire à l'axe de rotation du pneumatique.

Toute découpure a une ligne moyenne non nécessairement rectiligne, pouvant être ondulée ou en zigzag, et ayant une direction moyenne circonférentielle ou transversale. Par convention une découpure est dite circonférentielle, lorsque sa ligne moyenne a une direction moyenne circonférentielle, c'est-à-dire forme, avec la direction circonférentielle, un angle moyen inférieur à 45°. Une découpure est dite transversale, lorsque sa ligne moyenne a une direction moyenne transversale, c'est-à-dire forme, avec la direction axiale, un angle moyen au plus égal à 45°.

Les découpures d'une bande de roulement sont usuellement classées en deux catégories : les découpures larges, appelées rainures, et les découpures étroites, appelées incisions. Les rainures délimitent des éléments en relief pouvant se déformer sans venir en contact l'un avec l'autre, lors du passage de la bande de roulement dans la surface de contact avec le sol. Il est à noter que les rainures, qui sont les découpures les plus larges, présentent la plus forte probabilité de retenir les plus gros cailloux susceptibles de migrer et d'agresser la bande de roulement. Les incisions, moins larges que les rainures, ont une largeur telle que les parois des éléments en relief en vis-à-vis les délimitant viennent en contact au moins partiellement l'une avec l'autre, lors du passage de la bande de roulement dans la surface de contact. Pour déterminer la possibilité ou non de contact entre les parois de matière délimitant une découpure, les conditions de charge et de pression appliquées au pneumatique sont, par convention, celles spécifiées, par exemple, par les normes européennes de la « European Tyre and Rim Technical Organization » (Organisation technique européenne du pneu et de la roue) ou « E.T.R.T.O » dans son « Standards Manual 2020 - Commercial Vehicle Tyres » (Manuel de normes 2020 - Pneus pour véhicules commerciaux).

Les éléments en relief d'une bande de roulement de pneumatique à usage mixte sont généralement des blocs, organisés, le plus souvent, mais pas nécessairement, en rangées circonférentielles juxtaposées selon la direction axiale. La répartition des blocs peut être symétrique ou dissymétrique, par rapport à un plan circonférentiel médian, perpendiculaire à l'axe de rotation du pneumatique et passant par le milieu de la bande de roulement. Un bloc comprend une face de contact, positionnée dans la surface de roulement et destinée à entrer totalement en contact avec le sol, une face d'attaque, coupant la surface de roulement et dont l'arête d'intersection avec celle-ci est destinée à entrer en contact en premier avec le sol, une face de fuite, coupant la surface de roulement et dont l'arête d'intersection avec celle-ci est destinée à entrer en contact en dernier avec le sol, ainsi que deux faces latérales.

Il est connu qu'un pneumatique à usage mixte, en particulier destiné à équiper un essieu moteur, ayant une bande de roulement comprenant un agencement de blocs séparés les uns des autres par des rainures circonférentielles et/ou transversales, génère un bruit de roulage. En effet, les arêtes respectivement d'attaque et de fuite des blocs, lors de leur entrée et de leur sortie de la surface de contact du pneumatique avec un sol, créent des émissions acoustiques dont la somme constitue un spectre fréquentiel, générant un niveau de bruit global plus ou moins important.

Des normes, généralement spécifiques aux zones géographiques concernées, ont imposé des réductions au bruit global émis par les pneumatiques : ce qui a nécessité en particulier une évolution de la conception des bandes de roulement de pneumatique. A titre d'exemple, le document WO 201504150 A1 décrit un pneumatique pour un véhicule poids lourd, dont le niveau de bruit de roulage est réduit, sans altération des autres performances du pneumatique telles que l'usure et l'adhérence en motricité. Plus précisément, ce document décrit une bande de roulement avec une sculpture dissymétrique, par rapport à un plan circonférentiel séparant la bande de roulement respectivement en une partie gauche et une partie droite, selon le sens circonférentiel de roulage, ladite bande de roulement comprenant au moins cinq rangées circonférentielles de blocs réparties de part et d'autre dudit plan circonférentiel. Lesdits blocs sont agencés de telle façon que les arêtes d'attaque de tous les blocs sont décalées les unes par rapport aux autres dans le sens de roulage circonférentiel d'une manière appropriée, afin que ces arêtes d'attaque entrent de façon successive dans le contact pendant le roulage et que l'entrée dans le contact de ces arêtes d'attaque se fasse en alternance d'un côté et de l'autre du plan circonférentiel séparateur dans une sorte de va-et-vient.

La divulgation du document EP0734887A2 est considérée importante pour comprendre l'invention.

Les inventeurs se sont donnés pour objectif de réduire le bruit de roulage d'un pneumatique, destiné à équiper plus particulièrement un essieu moteur de véhicule poids lourd à usage mixte, ledit pneumatique ayant une bande de roulement comprenant un agencement approprié de blocs émettant un bruit de roulage réduit, tout en garantissant une motricité satisfaisante ainsi qu'une bonne aptitude de la bande de roulement à limiter la rétention de cailloux dans ses découpures.

Cet objectif a été atteint par un pneumatique pour un véhicule poids lourd, selon la revendication 1.

De façon essentielle, la bande de roulement d'un pneumatique selon l'invention comprend, selon la direction circonférentielle du pneumatique, une alternance de rangées de blocs et de découpures transversales, en forme de chevron, et s'étendant transversalement d'un bord à l'autre de la bande de roulement.

Une rangée de blocs en forme de chevron est une juxtaposition de blocs selon la direction axiale, appelée également direction transversale, les blocs étant disposés selon deux directions formant une flèche. La pointe du chevron, c'est-à-dire la pointe de la flèche, est un point géométrique ou une zone de raccordement des deux branches du chevron non nécessairement réduite à un point.

Les blocs d'une même rangée de blocs en forme de chevron sont deux à deux séparés par une découpure circonférentielle ayant une ligne moyenne formant, avec la direction circonférentielle, un angle moyen inférieur à 45°. Avantageusement l'angle moyen de la ligne moyenne d'une découpure circonférentielle est au plus égal à 15°.

Une découpure transversale en forme de chevron, séparant deux rangées consécutives de blocs en forme de chevron, s'étend continûment d'un bord de la bande de roulement à l'autre, de telle sorte que les arêtes d'attaque ou de fuite des blocs délimitant, dans la surface de roulement, ladite découpure transversale en forme de chevron sont positionnées sur une même ligne. En d'autres termes, les arêtes d'attaque ou de fuite de ces blocs sont positionnées dans la continuité l'une de l'autre en restant sur une même ligne, elle-même en forme de chevron. Par conséquent, de part et d'autre d'une même découpure circonférentielle, il n'y a pas de décalage circonférentiel des blocs délimitant ladite découpure circonférentielle.

Une découpure transversale en forme de chevron est une découpure dont la ligne moyenne est constituée de deux branches formant chacune, avec la direction axiale, un angle moyen non nul et se rejoignant en formant une flèche. L'angle moyen d'une branche est l'angle formé par la droite reliant les deux extrémités de ladite branche avec la direction axiale. Dans le cas de l'invention, cet angle moyen est au moins égal à 15° et au plus égal à 55°.

Cette alternance de rangées de blocs et de découpures transversales, en forme de chevron, dont chaque branche a une direction moyenne formant, avec la direction axiale, un angle moyen au moins égal à 15° et au plus égal à 55°, permet à la fois de réduire le bruit, d'améliorer la motricité et de limiter la rétention des cailloux.

D'une part, un angle moyen minimum de 15°, pour chaque branche du chevron, permet de décaler significativement les entrées des arêtes d'attaque des blocs d'une même rangée circonférentielle, dans le contact avec le sol, ce qui permet une réduction du bruit de roulage émis. D'autre part, un angle moyen maximum de 55°, pour chaque branche du chevron, permet d'avoir, dans la surface, une longueur cumulée d'arêtes des blocs d'une même rangée circonférentielle, garantissant une bonne adhérence du pneumatique, en particulier en motricité. En outre, la continuité des découpures transversales évite d'avoir des portions de transition anguleuses susceptibles de retenir des cailloux.

Préférentiellement l'angle moyen de chaque branche de la ligne moyenne de toute découpure transversale en forme de chevron, par rapport à la direction axiale, est au moins égal à 25°. Plus cet angle moyen est élevé, plus le décalage entre les entrées des arêtes d'attaque des blocs d'une même rangée circonférentielle, dans le contact avec le sol, est significatif, et plus le bruit de roulage est réduit.

Encore préférentiellement l'angle moyen de chaque branche de la ligne moyenne de toute découpure transversale en forme de chevron, par rapport à la direction axiale, est au plus égal à 40°. Plus cet angle moyen faible, plus la longueur cumulée d'arêtes de blocs dans la surface de contact est élevée, et donc meilleure est l'adhérence en motricité.

Avantageusement chaque branche de la ligne moyenne de toute découpure transversale en forme de chevron a une forme curviligne concave, de telle sorte que le centre de courbure en tout point de ladite branche est positionné, selon le sens de roulage du pneumatique, en avant de ladite branche. Cette forme concave a un but essentiellement esthétique.

Selon une variante préférée de la forme concave des branches de chevron précédemment décrite, le rayon de courbure R en tout point de ladite branche de forme curviligne concave est au moins égal à la largeur W de la bande de roulement. Un tel rayon de courbure évite d'avoir une inclinaison de la ligne moyenne de la découpure transversale trop faible, typiquement inférieure à 15°, en bord de de bande de roulement, ou trop élevée, typiquement supérieure à 55°, au centre de la bande de roulement.

Selon l'invention toute découpure transversale en forme de chevron a une profondeur maximale D2 et une largeur moyenne W2 de telle sorte que le rapport W2/D2 est au moins égal à 20%, de préférence au moins égal à 30%. La profondeur maximale D2 est la distance radiale entre la surface de roulement et le point le plus radialement intérieur de la découpure. La largeur moyenne W2 est définie comme la moyenne des largeurs sur toute la profondeur de la découpure, celle-ci ayant généralement des parois formant un angle, avec une direction radiale, appelé angle de dépouille. Un rapport W2/D2 au moins égal à 20% caractérise une découpure de type rainure, dont les parois peuvent se déformer sans venir en contact l'un avec l'autre, lors du passage de la bande de roulement dans la surface de contact avec le sol, et présente un avantage en termes de réduction de bruit. Un rapport W2/D2 au moins égal à 30% caractérise une rainure large efficace vis-à-vis de l'évacuation de l'eau et de la boue, lors du roulage sur sol meuble, et donc vis-à-vis de l'adhérence, en particulier, sur un sol meuble.

Également avantageusement toute découpure transversale en forme de chevron a une profondeur maximale D2 et une largeur moyenne W2 de telle sorte que le rapport W2/D2 est au plus égal à 150%. Au-delà de 150%, le volume total de découpures transversales devient pénalisant vis-à-vis de la durée en usure du pneumatique, car, corrélativement, il entraîne une réduction importante du volume de matière à user.

Encore selon l'invention toute découpure transversale en forme de chevron comprend une protubérance en fond de découpure, au niveau de la pointe de la forme de chevron. La présence d'une protubérance en fond de découpure transversale protège le fond de la découpure d'une agression éventuelle de cailloux emprisonnés dans ladite découpure. Un positionnement de cette protubérance en pointe de chevron est particulièrement efficace, car cette portion anguleuse est particulièrement propice à la rétention de cailloux.

Avantageusement toute découpure circonférentielle a une profondeur maximale D1 et une largeur moyenne W1 de telle sorte que le rapport W1/D1 est au moins égal à 20%. Comme vu précédemment un rapport W1/D1 au moins égal à 20% caractérise une découpure de type rainure, dont les parois peuvent se déformer sans venir en contact l'un avec l'autre, lors du passage de la bande de roulement dans la surface de contact avec le sol, et présente un avantage en termes de réduction de bruit.

Toutefois, un ratio W1/D1 inférieur à 20%, caractéristique d'une incision, dont les parois sont susceptibles de venir en contact, est également envisageable pour une découpure circonférentielle. En effet la présence d'incisions circonférentielles présente un intérêt vis-à-vis du compromis entre la durée de vie en usure, favorisée par un volume de matière à user plus important et des blocs moins déformables, et la résistance au roulement, favorisée par des blocs moins déformables.

Également avantageusement toute découpure circonférentielle a une profondeur maximale D1 et une largeur moyenne W1 de telle sorte que le rapport W1/D1 est au plus égal à 150%. Au-delà de 150%, le volume total de découpures circonférentielles devient pénalisant vis-à-vis de la durée en usure du pneumatique, car, corrélativement, il entraîne une réduction importante du volume de matière à user.

Préférentiellement le plan circonférentiel, contenant les pointes respectives des rangées de blocs en forme de chevron, est non médian et axialement positionné, par rapport au plan circonférentiel médian, perpendiculaire à l'axe de rotation du pneumatique et passant par le milieu de la bande de roulement, à une distance axiale Yp au plus égale à 20%, de préférence au plus égale à 10% de largeur W de la bande de roulement. Une dissymétrie de la bande de roulement permet d'avoir une désynchronisation des impacts sur le sol entre une partie droite et une partie gauche de la bande de roulement, ce qui contribue à une réduction du bruit. Mais cette dissymétrie doit être limitée pour conserver un fonctionnement équilibré de la bande de roulement en termes d'usure, d'adhérence et de comportement du pneumatique.

Selon un mode de réalisation particulier, au moins une partie des blocs de la bande de roulement comprennent des découpures de type incisions, ayant un rapport W3/D3 inférieur à 20%, W3 et D3 étant respectivement la largeur moyenne et la profondeur desdites incisions. Préférentiellement ces incisions sont transversales, c'est-à-dire ayant une ligne moyenne formant avec la direction axiale un angle moyen au plus égal à 45°. Encore préférentiellement, seuls les blocs, compris dans une portion médiane de la bande de roulement, symétrique par rapport au plan médian et ayant une largeur axiale au plus égale à 75% de la largeur W de la bande de roulement, comprennent des incisions. Par portion médiane, on entend une portion de bande de roulement ne débouchant pas sur les bords de la bande de roulement et comprise entre deux portions latérales débouchant chacune sur un bord de bande de roulement.

Les caractéristiques de l'invention sont illustrées par les figures 1 à 4 schématiques et non représentées à l'échelle suivantes :
- Figure 1 : Vue de dessus d'une bande de roulement selon un premier mode de réalisation de l'invention
- Figure 2 : Vue de dessus d'une bande de roulement selon un deuxième mode de réalisation de l'invention
- Figure 3 : Vue en coupe d'une découpure circonférentielle
- Figure 4 : Vue en coupe d'une découpure transversale

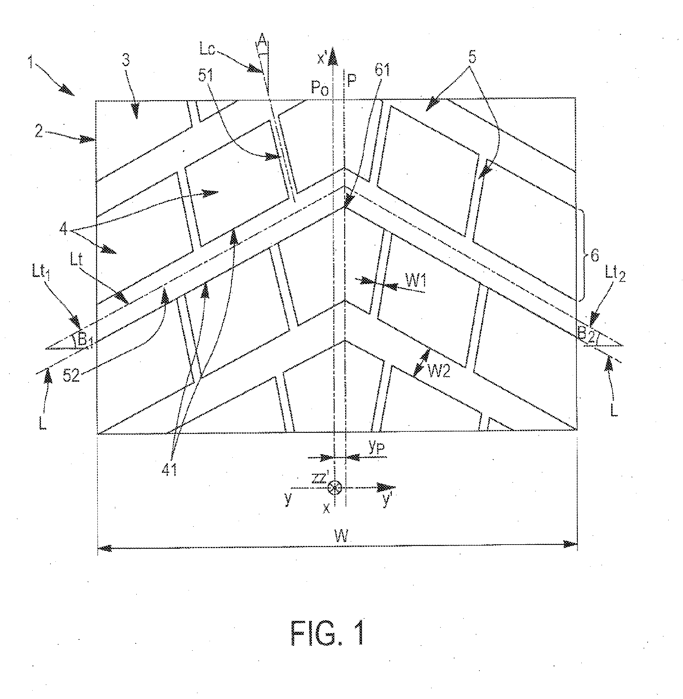

La figure 1 est une vue de dessus d'une bande de roulement 2 d'un pneumatique 1 pour un véhicule poids lourd, selon un premier mode de réalisation de l'invention à branches de chevron rectilignes. La bande de roulement 2, destinée à entrer en contact avec un sol par l'intermédiaire d'une surface de roulement 3, a une largeur W et comprend un agencement de blocs 4 deux à deux séparés par des découpures 5. L'agencement de blocs 4 est constitué, selon une direction circonférentielle XX' du pneumatique, par une répartition circonférentielle de rangées de blocs en forme de chevron 6, de telle sorte que tous les chevrons sont orientés selon le sens de roulage XX' du pneumatique et ont leurs pointes 61 respectives, positionnées, sur la figure 1, dans un même plan circonférentiel P non médian, perpendiculaire à l'axe de rotation du pneumatique et ne passant pas par le milieu de la bande de roulement 2. Ledit plan circonférentiel non médian P est axialement positionné, par rapport au plan circonférentiel médian P0, perpendiculaire à l'axe de rotation du pneumatique et passant par le milieu de la bande de roulement 2, à une distance axiale Yp. Selon le mode de réalisation particulier représenté, le plan circonférentiel non médian P est axialement positionné, par rapport au plan circonférentiel médian P0, à une distance axiale Yp au plus égale à 20%, de préférence au plus égale à 10% de largeur W de la bande de roulement. Chaque rangée de blocs en forme de chevron 6 s'étend d'un bord de la bande de roulement à l'autre et est constituée, selon une direction axiale YY' du pneumatique, par une juxtaposition de blocs 4. Les blocs 4 d'une même rangée de blocs en forme de chevron 6 sont deux à deux séparés par une découpure circonférentielle 51, ayant une largeur moyenne W1 et ayant une ligne moyenne Lc formant, avec la direction circonférentielle XX', un angle moyen A inférieur à 45°. Selon l'invention, deux rangées consécutives de blocs en forme de chevron 6 sont séparées par une découpure transversale en forme de chevron 52 s'étendant continûment d'un bord de la bande de roulement à l'autre, de telle sorte que les arêtes d'attaque ou de fuite 41 des blocs 4 délimitant, dans la surface de roulement 3, ladite découpure transversale en forme de chevron 52 sont positionnées sur une même ligne L, et toute découpure transversale en forme de chevron 52 a une ligne moyenne Lt constituée de deux branches (Lt1, Lt2) formant chacune, avec la direction axiale YY', un angle moyen (B1, B2) au moins à égal 15° et au plus égal à 55°. Dans le cas présent, l'angle moyen (B1, B2) de chaque branche rectiligne (Ltl, Lt2) est égal à l'angle constant formé par ladite branche rectiligne (Ltl, Lt2) avec la direction axiale YY'.

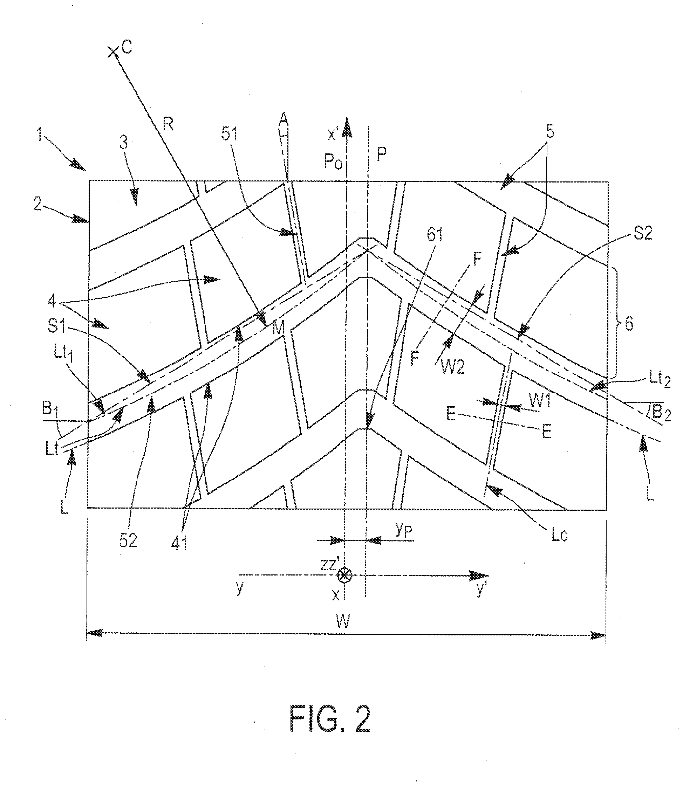

La figure 2 est une vue de dessus d'une bande de roulement d'un pneumatique pour un véhicule poids lourd, selon un deuxième mode de réalisation de l'invention à branches de chevron curvilignes. La figure 2 diffère de la figure 1 par la forme curviligne concave de la ligne moyenne de chaque branche (Ltl, Lt2) de la ligne moyenne de toute découpure transversale en forme de chevron 52, de telle sorte que le centre de courbure C en tout point M de ladite branche (Ltl, Lt2) est positionné, selon le sens de roulage du pneumatique, en avant de ladite branche (Ltl, Lt2). Préférentiellement le rayon de courbure R en tout point M de ladite branche (Ltl, Lt2) de forme curviligne concave est au moins égal à la largeur W de la bande de roulement 2. Dans le cas présent, l'angle moyen (B1, B2) de chaque branche curviligne (Ltl, Lt2) est égal à l'angle formé par la droite (S1, S2) passant par les extrémités de ladite branche curviligne (Ltl, Lt2) avec la direction axiale YY'. Dans le cas de la figure 1 précédemment décrit, les branches rectilignes (Ltl, Lt2) sont confondues avec les droites (S1, S2).

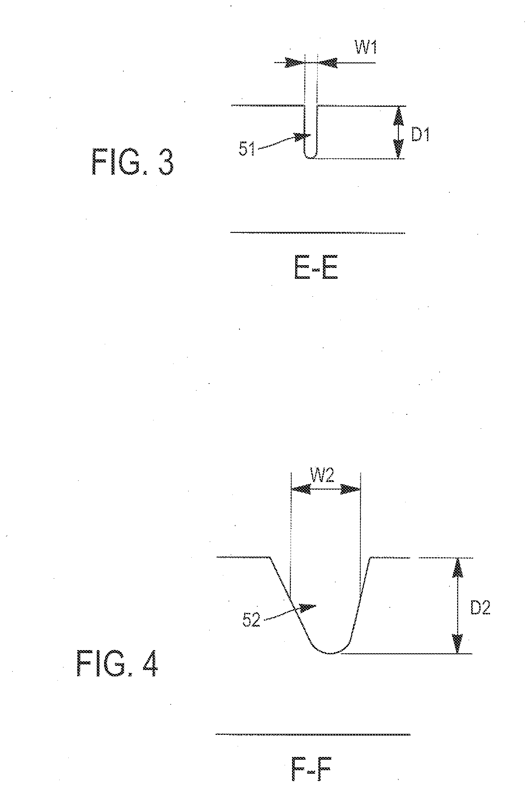

La figure 3 est une vue en coupe d'une découpure circonférentielle 51 d'une bande de roulement selon l'invention, telle que représentée sur la figure 2. Cette vue est réalisée selon un plan de coupe E-E de la figure 2, perpendiculaire à la ligne moyenne Lc de la découpure circonférentielle 51. Avantageusement la découpure circonférentielle 51 a une profondeur maximale D1 et une largeur moyenne W1 de telle sorte que le rapport W1/D1 est au moins égal à 20%, de préférence au moins égal à 30%. Encore avantageusement le rapport W1/D1 est au plus égal à 150%.

La figure 4 est une vue en coupe d'une découpure transversale en forme de chevron 52 d'une bande de roulement selon l'invention, telle que représentée sur la figure 2. Cette vue est réalisée selon un plan de coupe F-F de la figure 2, perpendiculaire à la branche Lt2 de la ligne moyenne de la découpure transversale en forme de chevron 52. Avantageusement la découpure transversale en forme de chevron 52 a une profondeur maximale D2 et une largeur moyenne W2 de telle sorte que le rapport W2/D2 est au moins égal à 20%. Encore avantageusement le rapport W2/D2 est au plus égal à 150%.

Le mode de réalisation de la figure 2 a été plus particulièrement étudié par les inventeurs dans la dimension de pneumatique 315/80R22.5, pour un pneumatique à usage mixte destiné à équiper un essieu moteur. Ce pneumatique a, d'un point de vue normatif, une capacité de charge égale à 3350 kg, pour une pression de gonflage égale à 8.5 bars.

Le tableau 1 ci-dessous présente les caractéristiques de la bande de roulement testée :

**[Tableau 1]**

| **Caractéristiques** | **Valeurs** |
|---|---|
| Angle moyen (B1, B2) des branches (Lt1, Lt2) de la ligne moyenne Lt d'une découpure transversale en forme de chevron 52 par rapport à la direction axiale YY' | 30° |
| Rayon de courbure moyen des branches (Lt1, Lt2) de la ligne moyenne d'une découpure transversale en forme de chevron 52 | 600 mm |
| Profondeur maximale D2 d'une découpure transversale en forme de chevron 52 | 22 mm |
| Largeur moyenne W2 d'une découpure transversale en forme de chevron 52 | 12 mm |
| Rapport W2/D2 d'une découpure transversale en forme de chevron 52 | 55% |
| Angle moyen A d'une découpure circonférentielle 51 par rapport à la direction circonférentielle XX' | 10° |
| Profondeur maximale D1 d'une découpure circonférentielle 51 | 18 mm (centre) / 14 mm (bord) |
| Largeur moyenne W1 d'une découpure circonférentielle 51 | 4 mm |
| Rapport W1/D1 d'une découpure circonférentielle 51 | 22% (centre) / 29% (bord) |
| Largeur W de la bande de roulement | 250 mm |
| Distance axiale Yp du plan circonférentiel non médian P par rapport au plan circonférentiel médian P0 | 10 mm |
| Rapport Yp/W | 4% |

Un test de bruit de roulage externe a été réalisé, conformément au règlement ECE R117 publié par la Commission Economique Européenne, et a montré un gain acoustique de -2dBA par rapport au seuil actuel de 76 dBA imposé à un pneumatique de classe C3 de catégorie Traction et labellisé 3PMSF (3 Peak Mountain Snow Flake : critères d'adhérence sur neige et sur verglas).

## Revendications

1. Pneumatique (1) pour un véhicule poids lourd, comprenant une bande de roulement (2), destinée à entrer en contact avec un sol par l'intermédiaire d'une surface de roulement (3), ayant une largeur W et comprenant un agencement de blocs (4) deux à deux séparés par des découpures (5),
- l'agencement de blocs (4) étant constitué, selon une direction circonférentielle (XX') du pneumatique, par une répartition circonférentielle de rangées de blocs en forme de chevron (6), de telle sorte que tous les chevrons sont orientés selon le sens de roulage (XX') du pneumatique et ont leurs pointes (61) respectives, positionnées dans un même plan circonférentiel (P), perpendiculaire à l'axe de rotation du pneumatique,
- chaque rangée de blocs en forme de chevron (6) s'étendant d'un bord de la bande de roulement à l'autre et étant constituée, selon une direction axiale (YY') du pneumatique, par une juxtaposition de blocs (4),
- les blocs (4) d'une même rangée de blocs en forme de chevron (6) étant deux à deux séparés par une découpure circonférentielle (51) ayant une ligne moyenne (Lc) formant, avec la direction circonférentielle (XX'), un angle moyen (A) inférieur à 45°,
deux rangées consécutives de blocs en forme de chevron (6) étant séparées par une découpure transversale en forme de chevron (52), s'étendant continûment d'un bord de la bande de roulement à l'autre, de telle sorte que les arêtes d'attaque ou de fuite (41) des blocs (4) délimitant, dans la surface de roulement (3), ladite découpure transversale en forme de chevron (52) sont positionnées sur une même ligne (L), toute découpure transversale en forme de chevron (52) ayant une ligne moyenne (Lt) constituée de deux branches (Lt1, Lt2) formant chacune, avec la direction axiale (YY'), un angle moyen (B1, B2) au moins à égal 15° et au plus égal à 55°, **caractérisé**
**en ce que** toute découpure transversale en forme de chevron (52) a une profondeur maximale D2 et une largeur moyenne W2 de telle sorte que le rapport W2/D2 est au moins égal à 20%, de préférence au moins égal à 30% **et en ce que** toute découpure transversale en forme de chevron (52) comprend une protubérance en fond de découpure, au niveau de la pointe de la forme de chevron.

2. Pneumatique (1) selon la revendication 1 **dans lequel** l'angle moyen (B1, B2) de chaque branche (Lt1, Lt2) de la ligne moyenne (Lt) de toute découpure transversale en forme de chevron (52), par rapport à la direction axiale (YY'), est au moins égal à 25°.

3. Pneumatique (1) selon la revendication 1 ou la revendication 2 **dans lequel** l'angle moyen (B1, B2) de chaque branche (Lt1, Lt2) de la ligne moyenne (Lt) de toute découpure transversale en forme de chevron (52), par rapport à la direction axiale (YY'), est au plus égal à 40°.

4. Pneumatique (1) selon l'une quelconque des revendications 1 à 3 **dans lequel** chaque branche (Lt1, Lt2) de la ligne moyenne (Lt) de toute découpure transversale en forme de chevron (52) a une forme curviligne concave, de telle sorte que le centre de courbure (C) en tout point (M) de ladite branche (Lt1, Lt2) est positionné, selon le sens de roulage du pneumatique, en avant de ladite branche (Lt1, Lt2).

5. Pneumatique (1) selon la revendication 4 **dans lequel** le rayon de courbure R en tout point (M) de ladite branche (Lt1, Lt2) de forme curviligne concave est au moins égal à la largeur W de la bande de roulement (2).

6. Pneumatique (1) selon l'une quelconque des revendications 1 à 5 **dans lequel** toute découpure transversale en forme de chevron (52) a une profondeur maximale D2 et une largeur moyenne W2 de telle sorte que le rapport W2/D2 est au plus égal à 150%.

7. Pneumatique (1) selon l'une quelconque des revendications 1 à 6 **dans lequel** toute découpure circonférentielle (51) a une profondeur maximale D1 et une largeur moyenne W1 de telle sorte que le rapport W1/D1 est au moins égal à 20%.

8. Pneumatique (1) selon l'une quelconque des revendications 1 à 7 **dans lequel** toute découpure circonférentielle (51) a une profondeur maximale D1 et une largeur moyenne W1 de telle sorte que le rapport W1/D1 est au plus égal à 150%.

9. Pneumatique (1) selon l'une quelconque des revendications 1 à 8 **dans lequel** le plan circonférentiel (P), contenant les pointes (61) respectives des rangées de blocs en forme de chevron (6), est non médian et axialement positionné, par rapport au plan circonférentiel médian (P0), perpendiculaire à l'axe de rotation du pneumatique et passant par le milieu de la bande de roulement (2), à une distance axiale Yp au plus égale à 20%, de préférence au plus égale à 10% de largeur W de la bande de roulement.

## Patentansprüche

1. Reifen (1) für ein Schwerlastfahrzeug, welcher einen Laufstreifen (2) umfasst, der dazu bestimmt ist, über eine Lauffläche (3) mit einem Boden in Kontakt zu kommen, eine Breite W aufweist und eine Anordnung von Blöcken (4) umfasst, die paarweise durch Ausschnitte (5) getrennt sind,
- wobei die Anordnung von Blöcken (4) in einer Umfangsrichtung (XX') des Reifens aus einer Umfangsverteilung von Reihen von Blöcken in Pfeilform (6) besteht, derart, dass alle Pfeile in der Laufrichtung (XX') des Reifens ausgerichtet sind und ihre jeweiligen Spitzen (61) in derselben Umfangsebene (P) positioniert sind, die zur Drehachse des Reifens senkrecht ist,
- wobei jede Reihe von Blöcken in Pfeilform (6) sich von einem Rand des Laufstreifens zum anderen erstreckt und in einer axialen Richtung (YY') des Reifens aus einer Anordnung von Blöcken (4) nebeneinander besteht,
- wobei die Blöcke (4) ein und derselben Reihe von Blöcken in Pfeilform (6) paarweise durch einen umlaufenden Ausschnitt (51) getrennt sind, der eine Mittellinie (Lc) aufweist, die mit der Umfangsrichtung (XX') einen mittleren Winkel (A) bildet, der kleiner als 45° ist,
wobei zwei aufeinander folgende Reihen von Blöcken in Pfeilform (6) durch einen quer verlaufenden Ausschnitt in Pfeilform (52) getrennt sind, der sich durchgehend von einem Rand des Laufstreifens zum anderen erstreckt, derart, dass die Vorder- oder Hinterkanten (41) der Blöcke (4), die in der Lauffläche (3) den quer verlaufenden Ausschnitt in Pfeilform (52) begrenzen, auf derselben Linie (L) positioniert sind, wobei jeder quer verlaufende Ausschnitt in Pfeilform (52) eine Mittellinie (Lt) aufweist, die aus zwei Zweigen (Ltl, Lt2) besteht, die jeweils mit der axialen Richtung (YY') einen mittleren Winkel (B1, B2) bilden, der mindestens gleich 15° und höchstens gleich 55° ist, **dadurch gekennzeichnet, dass** jeder quer verlaufende Ausschnitt in Pfeilform (52) eine maximale Tiefe D2 und eine mittlere Breite W2 aufweist, derart, dass das Verhältnis W2/D2 mindestens 20 % beträgt, vorzugsweise mindestens 30 % beträgt, und dadurch, dass jeder quer verlaufende Ausschnitt in Pfeilform (52) eine Erhebung am Boden des Ausschnitts, an der Spitze der Pfeilform, umfasst.

2. Reifen (1) nach Anspruch 1, wobei der mittlere Winkel (B1, B2) jedes Zweiges (Ltl, Lt2) der Mittellinie (Lt) jedes quer verlaufenden Ausschnitts in Pfeilform (52) bezüglich der axialen Richtung (YY') mindestens 25° beträgt.

3. Reifen (1) nach Anspruch 1 oder Anspruch 2, wobei der mittlere Winkel (B1, B2) jedes Zweiges (Ltl, Lt2) der Mittellinie (Lt) jedes quer verlaufenden Ausschnitts in Pfeilform (52) bezüglich der axialen Richtung (YY') höchstens 40° beträgt.

4. Reifen (1) nach einem der Ansprüche 1 bis 3, wobei jeder Zweig (Ltl, Lt2) der Mittellinie (Lt) jedes quer verlaufenden Ausschnitts in Pfeilform (52) eine konkave gekrümmte Form aufweist, derart, dass der Krümmungsmittelpunkt (C) in jedem Punkt (M) des Zweiges (Ltl, Lt2) in der Laufrichtung des Reifens vor diesem Zweig (Ltl, Lt2) positioniert ist.

5. Reifen (1) nach Anspruch 4, wobei der Krümmungsradius R in jedem Punkt (M) des Zweiges (Ltl, Lt2) von konkaver gekrümmter Form mindestens gleich der Breite W des Laufstreifens (2) ist.

6. Reifen (1) nach einem der Ansprüche 1 bis 5, wobei jeder quer verlaufende Ausschnitt in Pfeilform (52) eine maximale Tiefe D2 und eine mittlere Breite W2 aufweist, derart, dass das Verhältnis W2/D2 höchstens 150 % beträgt.

7. Reifen (1) nach einem der Ansprüche 1 bis 6, wobei jeder umlaufende Ausschnitt (51) eine maximale Tiefe D1 und eine mittlere Breite W1 aufweist, derart, dass das Verhältnis W1/D1 mindestens 20 % beträgt.

8. Reifen (1) nach einem der Ansprüche 1 bis 7, wobei jeder umlaufende Ausschnitt (51) eine maximale Tiefe D1 und eine mittlere Breite W1 aufweist, derart, dass das Verhältnis W1/D1 höchstens 150 % beträgt.

9. Reifen (1) nach einem der Ansprüche 1 bis 8, wobei die Umfangsebene (P), welche die jeweiligen Spitzen (61) der Reihen von Blöcken in Pfeilform (6) enthält, nicht mittig ist und bezüglich der mittleren Umfangsebene (P0), die senkrecht zur Drehachse des Reifens ist und durch die Mitte des Laufstreifens (2) verläuft, in einem axialen Abstand Yp axial positioniert ist, der höchstens 20 %, vorzugsweise höchstens 10 % der Breite W des Laufstreifens beträgt.

## Claims

1. A tire (1) for a heavy goods vehicle, comprising a tread (2) which is intended to come into contact with the ground via a travel surface (3), having a width W and comprising an arrangement of blocks (4) in pairs which are separated by cut-outs (5),
- the arrangement of blocks (4) being constituted, in a circumferential direction (XX') of the tire, by a circumferential distribution of rows of blocks in the form of a chevron (6) so that all the chevrons are orientated in the travel direction (XX') of the tire and have their respective tips (61), which are positioned in the same circumferential plane (P), perpendicular to the rotation axis of the tire,
- each row of blocks in the form of a chevron (6) extending from one edge of the tread to the other and being constituted in an axial direction (YY') of the tire by a juxtaposition of blocks (4),
- the blocks (4) of the same row of blocks in the form of a chevron (6) being separated in pairs by a circumferential cut-out (51) which has a mean line (Lc) which forms, with the circumferential direction (XX'), a mean angle (A) less than 45°,
two consecutive rows of blocks in the form of a chevron (6) being separated by a transverse cut-out in the form of a chevron (52) which extends continuously from one edge of the tread to the other so that the leading or trailing edges (41) of the blocks (4) which delimit, in the travel surface (3), the transverse cut-out in the form of a chevron (52) are positioned in the same line (L),
any transverse cut-out in the form of a chevron (52) having a mean line (Lt) which is constituted by two branches (Lt1, Lt2) which each form, with the axial direction (YY'), a mean angle (B1, B2) at a minimum of 15° and at a maximum of 55°,
**characterized in that** any transverse cut-out in the form of a chevron (52) has a maximum depth D2 and a mean width W2 so that the ratio W2/D2 is at least 20%, preferably at least 30% **and in that** any transverse cut-out in the form of a chevron (52) comprises a protuberance at the base of the cut-out, in the region of the tip of the chevron-like shape.

2. The tire (1) as claimed in Claim 1, **wherein** the mean angle (B1, B2) of each branch (Lt1, Lt2) of the mean line (Lt) of each transverse cut-out in the form of a chevron (52), relative to the axial direction (YY'), is at a minimum 25°.

3. The tire (1) as claimed in Claim 1 or Claim 2, **wherein** the mean angle (B1, B2) of any branch (Lt1, Lt2) of the mean line (Lt) of each transverse cut-out in the form of a chevron (52), relative to the axial direction (YY'), is at a maximum 40°.

4. The tire (1) as claimed in one of Claims 1 to 3, **wherein** each branch (Lt1, Lt2) of the mean line (Lt) of any transverse cut-out in the form of a chevron (52) has a concave curvilinear shape so that the center of curvature (C) at any point (M) of the branch (Lt1, Lt2) is positioned, in the travel direction of the tire, in front of the branch (Lt1, Lt2).

5. The tire (1) as claimed in Claim 4, **wherein** the radius of curvature R at any point (M) of the branch (Lt1, Lt2) of concave curvilinear shape is at least equal to the width W of the tread (2).

6. The tire (1) as claimed in one of Claims 1 to 5, **wherein** any transverse cut-out in the form of a chevron (52) has a maximum depth D2 and a mean width W2 so that the ratio W2/D2 is at the most 150%.

7. The tire (1) as claimed in one of Claims 1 to 6, **wherein** any circumferential cut-out (51) has a maximum depth D1 and a mean width W1 so that the ratio W1/D1 is at least 20%.

8. The tire (1) as claimed in one of Claims 1 to 7, **wherein** any circumferential cut-out (51) has a maximum depth D1 and a mean width W1 so that the ratio W1/D1 is at the most 150%.

9. The tire (1) as claimed in one of Claims 1 to 8, **wherein** the circumferential plane (P), which contains the respective tips (61) of the rows of blocks in the form of a chevron (6) is non-median and axially positioned relative to the central circumferential plane (P0), which is perpendicular to the rotation axis of the tire and which extends through the center of the tread (2), at an axial distance Yp which is at the most 20%, preferably at the most 10% of the width W of the tread.
